# EUROPEAN PATENT APPLICATION

(11) **EP 3 324 654 A1**
(43) Date of publication of application: **23.05.2018**
(21) Application number: 16002446.9
(22) Date of filing: 17.11.2016
(51) Int. Cl.: H04W 4/00, H04L 29/08

(54) **INTEGRATING INTERNET-OF-THINGS DEVICES WITH SIM AND WITHOUT SIM**

(71) Applicant: Giesecke+Devrient Mobile Security GmbH, 81677 München (DE)
(72) Inventor: Tea, Vui Huang, SE-12061 Stockholm (SE)

(57) **Abstract**

The present invention is directed towards mediating end devices being applied in the application scenario of the so called Internet-of-Things. The present invention aims at using commonly known infrastructures and adapting them towards the integration of different hardware types. The present invention is furthermore directed towards a communication protocol implementing the suggested method step as well towards a server system for performing the suggested method. Furthermore, a computer program product is suggested providing instructions implementing the suggested method and being able to operate the server system.

## Description

The present invention is directed towards mediating end devices being applied in the application scenario of the so called Internet-of-Things. The present invention aims at using commonly known infrastructures and adapting them towards the integration of different hardware types. The present invention is furthermore directed towards a communication protocol implementing the suggested method as well towards a server system for performing the suggested method. Furthermore, a computer program product is suggested providing instructions implementing the suggested method and being able to operate the server system.

US 2016 105 6614 A1 teaches a method for provisioning a device over an Internet-of-Things platform the method comprising receiving a connection request and a device identification, determining whether the device ID is prestored in an Internet-of-Things database, automatically generating an user name, transmitting the user name and the password and facilitating the device for establishing a communication with the Internet-of-Things platform. Furthermore, a broker is disclosed enabling communication between the device and the Internet-of-Things platform.

CN 103336813 A teaches an architecture based on middleware integration and data management solution providing different layers for heterogeneous data integration.

KR 2015 009037 A teaches an Internet-of-Things application service module, an Internet-of-Things service platform and an intelligent situation framework including a broker.

In telecommunication systems it is commonly known to provide abstract layers, which hide functionality from further components. Commonly known is for instance the ISO/OSI model. The ISO/OSI model provides several layers hiding technical details from the respectively next layer. In this fashion technical details are hidden from the application programs, such that implementing applications is made possible without considering the respective hardware platform. Consequently, a huge variety of instructions can be reused no matter what hardware components are applied.

Furthermore so-called broker technology is known, which serves as a switch between several object models and establishes a bridge between the techniques. This is typically applied in software engineering which allows the compatibility of data models using a central instance bridging the gap between the object models. Furthermore, abstract interfaces are known which can be implemented providing different functionality.

Known methods are typically applied in the application domain of software engineering without considering specific hardware requirements. In case, one hardware level is abstracted a programmer does not need to care about any hardware specifications. Consequently, instructions sets are not implemented under consideration of specific hardware details.

There is a disadvantage regarding legacy systems which aim at the implementation of commonly known communication infrastructures. Accordingly, technical devices are implemented such that they address commonly known devices using SIM cards without being able to be adapted towards further hardware devices which do not comprise a SIM card. A SIM card provides a specific storage and is addressed by typical operations. Furthermore, it is of disadvantage that such SIM cards along with the respective control logics rely on a specific instruction set.

Difficulties arise once such a known infrastructure, applying for instance SIM cards, is to be enhanced towards the emerging Internet-of-Things. The Internet-of-Things is a concept implying a novel hardware generation. Such hardware is typically light weight, which means that processors and memories are of very limited capacity. Accordingly, such Internet-of-Things devices do not comprise hardware components, which are commonly known in legacy systems. Typically Internet-of-Things devices do not comprise SIM cards but rather rely on Wi-Fi technology, near field communication, Low-Power WAN (LPWAN) etc.

The technical considerations which led to the present invention are that in case commonly known mobile telecommunication systems need to be adapted towards the Internet-of-Things application scenario, typical hardware components are not available anymore. An example of such a component is the above mentioned SIM card. The SIM card provides a specific instruction set offering crucial information. Now that such components are not available in the Internet-of-Things application scenario somehow such devices have to be integrated in existing legacy systems.

Consequently, it is an object of the present invention to provide a method for seamlessly integrating Internet-of-Things devices into established mobile telecommunication infrastructures. It is an object to provide a solution which allows such light weight components using a potentially instable connection to be integrated into legacy systems relying on components which are not available in such hardware efficient end devices. It is furthermore an object of the present invention to provide a communication protocol implementing the method steps along with a server system being arranged to perform the suggested method steps and furthermore execute the protocol instructions. It is furthermore an object of the present invention to provide a computer program product providing instructions implementing the method steps and operating the suggested server system.

The object is solved by means according to independent claim 1. Further advantages and technical effects are provided by dependent claims.

Accordingly, a method for seamlessly integrating Internet-of-Things devices into an established mobile telecommunication infrastructures is provided. The method comprises providing a first set of instructions being arranged to communicate with subscriber identity modules, the instructions being deployed on a server. Furthermore providing a second set of instructions is performed being arranged to communicate with end devices not comprising subscriber identity modules, wherein upon receiving instruction calls the server selects one of the first set of instructions and the second set of instructions as a function of either the subscriber identity module or the end devices being involved in instruction processing.

As mentioned above, the Internet-of-Things devices are devices, which are light weight meaning that the hardware resources are of low capacity. For instance, a microcontroller may be applied with a reduced instruction set. Furthermore, memories are not mass storage devices but rather provide memories of a capacity of merely several bytes or kilobytes. Furthermore, Internet-of-Things devices are typically powered using a battery or an induction coil meaning that there is only a limited capacity of electricity available. Consequently, such Internet-of-Things devices are only suitable for performing smaller instruction sets requiring only limited computational power, memory and electricity. Furthermore, the Internet-of-Things scenario is typically a mobile scenario as for instance consumer products or cars are used as end devices. The Internet-of-Things application scenario may for instance be demonstrated by car-to-car communication. That means that a first car drives along a road and communicates sensor data to a following car. The application scenario may as well be implemented using chip cards which are made part of a telecommunication infrastructure. Consequently, such a chip card has to be integrated into mobile telecommunication infrastructures. A mobile telecommunication infrastructure is a cellular network relying on GSM, UMTS and/or LTE technology. Such a mobile telecommunication infrastructure is typically implemented using hardware devices such as smartphones. Accordingly, legacy systems are implemented considering such smartphones which is no more applicable regarding the management of so-called Internet-of-Things devices.

According to the suggested method providing a first set of instructions being arranged to communicate with subscriber identity modules is performed. A subscriber identity module also referred to as SIM card, is a specific module providing very specific instructions. Several implementations are available designed only to work with SMS center, SMSC, and/or MMS center, MMSC, protocols. Known implementations are MSISDN, ICCID, and IMSI.. These SMSC and MMSC store and forward systems work very differently from the real time Internet-of-Things protocols. To add an Internet-of-Things gateway to an existing Over-the-AIR OTA system is a massive amount of work and means reengineering of the server. This would cost a lot of time and resources as well as making the original OTA system very complex and difficult to maintain. The invention makes it viable by repurposing the BOM, Batch Order Manager, which is a legacy component to seamless support Internet-of-Things protocols without interfering or mixing it with the mobile network protocols.

It is an aspect of the present invention to use the OTA system to process the Internet-of-Things communication at a high abstract layer such that the OTA system does not know that it is dealing with Internet-of-Things protocols. Only at the time when the Internet-of-Things protocols must be used, the flow is redirected to the new isolated Internet-of-Things module of the OTA system. The OTA system is an example for a legacy system.

As the existing system is unmodified or only minimally modified, the majority of functions and API/SDK will seamlessly support Internet-of-Things devices instead of just SIM cards and mobile phones. As third parties or custom application dependent or connected to the existing OTA system will benefit from the seamlessly support of Internet-of-Things devices as well.

The first set of instructions being arranged to communicate with subscriber identity modules is arranged to perform specific operations which are tailored towards SIM cards. These SIM cards provide specific instructions which the first set of instructions is able to implement. For instance, a subscriber identity module provides a specific identification, which is unique. In case Internet-of-Things devices are integrated in a mobile telecommunication infrastructure, a respective method is required as well without usage of SIM cards. In general, a SIM card may be implemented as a UICC or a eUICC. These are modules being especially tailored to the application domain of mobile telecommunication using cell phones. For integrating further devices not comprising subscriber identity modules, a second set of instructions is provided. This second set of instructions performs the communication steps being directed towards the end devices not comprising subscriber identity modules, namely the Internet-of-Things devices. Consequently, two instruction sets are provided, one for communicating with SIM cards and one further instruction set for communication with Internet-of-Things devices.

Hence, end devices not comprising subscriber identity modules are those devices, which communicate using Wi-Fi, Bluetooth, NFC or any other communication standard not requiring a SIM card. The communication to be performed by respective end devices does not require the subscription at a base station as it is known in UMTS or LTE standards. Accordingly, the communication is performed using other electronic components than subscriber identity modules.

Once the server receives instruction calls the respective instruction set has to be chosen depending on what component is addressed by the respective instruction calls. For instance, it may be required to send information to a subscriber identity module, then the server accordingly selects the first set of instructions. In case information is to be transmitted to an Internet-of-Things device then the second instruction set is chosen. The respective instruction sets comprise methods and operations, which require data processing involving either the subscriber identity module or the end device not comprising a subscriber identity module. In general, the subscriber identity module may not be directly addressed but rather a specific device operating the subscriber identity module may be addressed. Consequently, in case a cell phone or a smartphone is addressed by respective instruction calls, then the first set of instructions is chosen.

Being involved in instruction processing means that either the subscriber identity module is addressed or provides respective information or the end device not comprising the subscriber identity module is involved. For instance, in case data on a SIM card is to be updated this can be performed using the first set of instructions in case a sensor has to be read out of an Internet-of-Things device the second set of instructions is required. The server identifies respective requirements and accordingly selects the appropriate set of instructions for performing the required instructions being specified in the instruction call. The instruction call requires operating either instructions from the first set or the second set. Hence, the instruction call does not directly specify a specific instruction but requires a specific service. Accordingly, the server will recognize how the service is to be implemented and choose one of the instruction sets.

Merely by way of example a specific application scenario is motivated in the following. Maybe, an instruction call requires that the device is updated. The device may for instance be a cell phone comprising a SIM card or may either be a device of the application scenario named Internet-of-Things. The server now tries to identify which kind of device is to be updated and chooses the first set of instructions in case a cell phone is to be updated or chooses the second set in case an Internet-of-Things device is to be updated. Consequently, the instruction call itself may be abstract and may be implemented as a function of the addressed devices. In case a SIM card is present, different operations along with different implementations of these operations are available. This is provided in the first set of instructions. It may be the case that instructions which are intended for usage by a SIM card, are likewise implementable such that the Internet-of-Things end device may also perform them. It may also be the case that a different implementation of the same functionality is required for both types of end devices. Accordingly, the server identifies which end devices is addressed and accordingly chooses the appropriate set of instructions.

The technical considerations which lead to the present invention address the problem that legacy systems need to be enhanced towards the Internet-of-Things scenario. Not following known techniques the present invention does not completely hide layers but rather implements a broker being especially tailored to telecommunication infrastructures. Surprisingly, it has been found out by the inventor that not a complete abstraction layer is required but rather that specific instruction sets can be chosen which is applicable in the domain of mobile telecommunication infrastructures applying subscriber identity modules. The ISO/OSI model is typically implemented on two devices resulting a left side of the stack and a right side of the stack. In contrast to this, the present invention can be distributed across telecommunication systems and be deployed according to the operators needs. Moreover, according to the presented solution any device being settled in the application domain of the so-called Internet-of-Things can be integrated into legacy mobile telecommunication infrastructures. Consequently, no separate infrastructures have to be implemented and already implemented infrastructures regarding known telecommunication systems can be reused.

According to an aspect of the present invention electrically powering end devices is performed using batteries and/or induction coils. This provides the advantage that the end devices, which do not comprise subscriber identity modules, typically meaning those end devices not being smartphones but rather Internet-of-Things devices, can be clearly distinguished from existing end devices being not part of the application scenario of the Internet-of-Things. For instance, it is of special advantage that in this way smartcards can be implemented as end devices not comprising subscriber identity modules as typically smartcards are electrically powered by induction coils. Furthermore, the notion of end devices not comprising a subscriber identity module and therefore an Internet-of-Things device is distinguished over the art as for instance RFID devices can be applied as well. This is very typical regarding the underlying application scenario and therefore provides a clear distinguishing features contributing over the art. For example, end devices communicating over an RFID chip can be seamlessly integrated in a system which is able to serve cell phones as well.

According to a further aspect of the present invention communicating with end devices is performed considering instable connections. This is of advantage as in the underlying application scenario of Internet-of-Things mobile devices are applied which do not comprise huge capacities of hardware resources. Accordingly, a smartcard or a device operating an RFID chip are not able to provide strong radio signals and therefore communication may be instable. Considering such an instable connection may result in fault tolerant protocols such that lost packets may be resent. In case a timeout occurs, an already sent packet may then be sent again. The instable connections may result from the underlying application scenario as end devices according to the Internet-of-Things concept do not operate sophisticated transmission units but rather run light weight units.

According to a further aspect of the present invention, the end devices perform machine-to-machine communication steps. Accordingly, the end devices, namely those end devices not comprising subscriber identity modules, connect to each other and do not completely rely on user input. These end devices communicate with each other and exchange for instance sensor information. Consequently, machine-to-machine communication can be integrated into legacy systems as well.

According to a further aspect of the present invention selecting one instruction set is performed under consideration of at least one of a group of indicators, the group comprising: a target identifier, a target type, an instruction, an instruction signature, a list of instruction being respectively assigned to either the first or the second set, a protocol specification, and a support instruction set. This provides the advantage that a clear set of rules can be provided allowing the server to properly select one of the instruction sets. Accordingly, a target identifier may identify which end device may comprise a subscriber entity module or not is to be addressed. This directly specifies, which instruction set to use. Furthermore, a target type can be indicated by the instruction call such that it becomes obvious which one of the types of end devices is addressed. Accordingly, the target type may either be a subscriber identity module or an end device comprising a subscriber identity module resulting in the first set of instruction to the chosen. The target type may specify a so-called Internet-of-Things device and accordingly, the second set is chosen. The instruction itself or the signature of the instruction may as well identify the respective set. The signature may define a function along with at least one parameter type. It may be the case that both sets comprise a function being named "update". In case the update function is called using one parameter this might be a method of the first instruction set, wherein further parameters are named the second set is identified. Accordingly, from the function signature it may be possible for the server to identify which type of end device is addressed. It is also possible to name the respective instructions and perform a look-up in a table or a list indicating to which set of instructions the respective instruction is assigned to. Furthermore, a protocol specification may provide the information, which underlying technique is to be used, which can be UMTS for the first instruction set and for instance XMPP for the second set of instructions. In case the instruction call is only supported by one of the sets the respective set is chosen.

According to a further aspect of the present invention, at least one instruction of the first set of instructions is imitated by at least one instruction of the second set of instructions. This provides the advantage that all instructions which are implemented in legacy systems can be reused regarding the Internet-of-Things application scenario. This is possible for instance in case an update function is implemented in the first set of instructions a similar functionality can be implemented by the second set of instructions. Accordingly, the instruction of the first set is imitated as the same functionality is provided by the respective instructions of the second set. Consequently, legacy systems can be reused and involve further end devices not comprising a SIM card without necessity of amendments.

According to a further aspect of the present invention, selecting one instruction set is performed using an enhancement of an already established software module. This provides the advantage that legacy systems can be reused and merely selecting the specific instruction set is required. Accordingly, the respective instruction set is selected and further modules may be provided for performing end device specific applications.

According to a further aspect of the present invention, the second set of instructions conforms with communication protocols for machine-to-machine communication. This provides the advantage that not merely the end devices perform machine-to-machine communication but rather specific protocols can be implemented on the server side.

According to a further aspect of the present invention, the second set of instructions conforms with at least one of XMPP, CoAP, and MQTT or similiar. This provides the advantage that commonly known communication protocols in the application scenario of Internet-of-Things can be reused. The major communication protocols, namely extensible messaging and presence protocol XMPP, constrained application protocol, CoAP, and Message Quene Tele-metry Transport, MQTT, without a specific restriction to these protocols. While these are the major communication protocols in the Internet-of-Things the Internet-of-Things application scenario the skilled practitioner will appreciate that also further protocols settled in the application domain of Internet-of-Things is applicable. Consequently, these protocols are merely introduced by way of example.

According to a further aspect of the present invention, the second set of instructions provides an interface for communication with software modules each implementing a specific protocol. This provides the advantage that for each protocol, for instance each of the protocols as mentioned above, a specific module can be provided which performs the respective instructions. Consequently, separate modules can be attached to an Internet-of-Things gateway.

According to a further aspect of the present invention, the end devices use communication interfaces implementing Wi-Fi, Bluetooth, Infrared, near field communication and/or Low-Power WAN (LPWAN) etc. This provides the advantage that commonly known techniques in the field of Internet-of-Things can be reused. Hence, communication means are provided, which do not require a subscriber identity module.

According to a further aspect of the present invention, the end devices are operated using instructions from a read-only memory. This is also of advantage as light weight end devices can be used according to the present invention as the Internet-of-Things scenario may also apply specific sensors or further end devices, which do not comprise a writeable memory such that applications can be loaded into such a device. This distinguishes the Internet-of-Things end devices from commonly known smartphones, which comprise a subscriber identity module.

The object is also solved by a communication protocol for seamlessly integrating Internet-of-Things devices into established mobile telecommunication infrastructures. The communication protocol corresponds with the method set forth above and therefore suggests method steps to be performed similar to those as being defined above, which are implemented using different communication partners. Accordingly, a distributed system is suitable for performing the suggested protocol in accordance with the suggested method.

The object is also solved by a server system for seamlessly integrating Internet-of-Things devices into established mobile telecommunication infrastructures. The server system comprises a storage being arranged to provide a first set of instructions being arranged to communicate with subscriber identity modules, the instructions being deployed on a server. Furthermore, a further storage device or the same storage device as presented above is provided being arranged to provide a second set of instructions being arranged to communicate with end devices not comprising subscriber identity modules, wherein upon reception of instruction calls the server selects one of the first set of instructions and the second set of instructions as a function of either the subscriber identity module or the end device being involved in instruction processing.

The object is also solved by a computer program product being arranged to perform a method as suggested above or operate the further system.

The suggested server system comprises structural features, which may be distributed over a network. Furthermore, the server system may be implemented in accordance with the method as set forth above. Consequently, each feature being described in the context of the suggested method can be reused implementing the server system.

Further advantages and technical effects will be described by means of the accompanying figures, which show:
- Fig. 1:: a schematic illustration of a server system according to an aspect of the present invention; and
- Fig. 2:: a flow-chart depicting method steps of a method for seamlessly integrating Internet-of-Things devices into established mobile telecommunication infrastructures according to an aspect of the present invention.

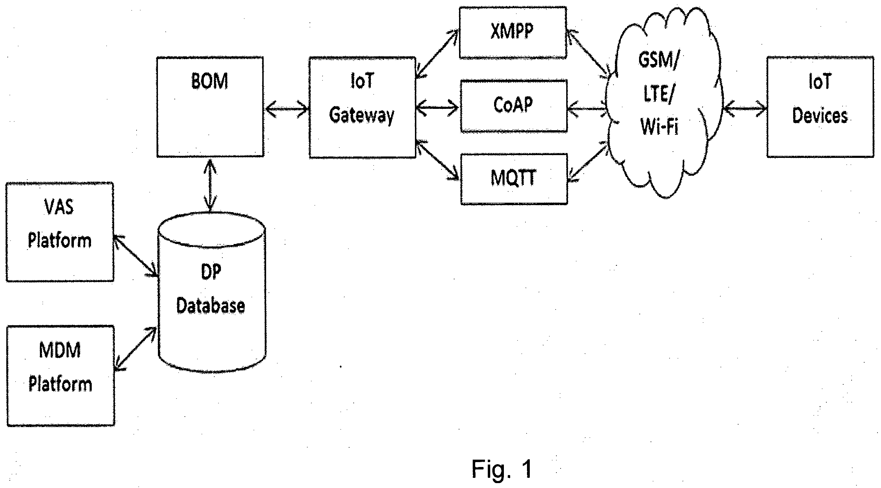

Fig. 1 shows an example of an implementation of the suggested server system. On the left hand side specific platforms are indicated, which are connected to a data base. Furthermore, a BOM, namely a Batch Order Manager, is depicted. These components represent legacy systems, which may be implemented considering hardware devices using subscriber identity modules. Accordingly, they implement a first set of instructions. These instructions are arranged to communicate with subscriber identity modules. Accordingly, this specifies a typical legacy system being used by network operators or hardware suppliers. Those components enable the actors to update subscriber identity modules and perform instructions being implemented and optimized for subscriber identity modules or respectively devices using such subscriber identity modules.

As it is highly required to introduce further end devices according to the Internet-of-Things application scenario, the above identified instruction set is no more sufficient. Still, it has to be reused but has to be somehow adapted towards the Internet-of-Things application scenario. Consequently, the Internet-of-Things module, named IoT Gateway, is introduced. This is a server module which is arranged to communicate with protocols as being described above. As can be seen in the cloud on the right hand side several communication standards are supported. On the right hand side an Internet-of-Things end device is depicted. Consequently, it is possible to reuse the instruction set implemented by the components depicted on the left hand side and furthermore introduce further end devices with do not rely on a subscriber identity module. This is a very specific application scenario as the telecommunication standards are highly sophisticated and according to the present invention even end devices not comprising such a subscriber identity module can be integrated.

In the following a further example will be provided merely to demonstrate an embodiment. Typical OTA servers are designed to work only with SMSC/MMSC protocols and SIM cards are identified by MSISDN, ICCID, IMSI, and related protocols. Internet-of-Things devices have no SIM card, therefore Internet-of-Things protocols are different from SMSC/MMSC protocols. Adding the Internet-of-Things gateway to an existing OTA system is very complex. The solution to this problem is to provide a Batch Order Manager, BOM, which is changed to support Internet-of-Things protocols as well as mobile network protocols directing Internet-of-Things, to Internet-of-Things modules of OTA system. Consequently, the technical advantages arise, among others, that existing OTA systems are not modified or only minimally modified and most functions and API/SDK will support Internet-of-Things devices instead of just SIM cards and mobile phones.

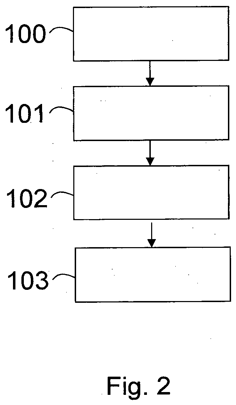

Fig. 2 shows a flowchart depicting a method for seamlessly integrating Internet-of-Things devices into established mobile telecommunication infrastructures, comprising the steps of providing 100 a first set of instructions being arranged to communicate with subscriber identity modules, the instructions being deployed on a server. Furthermore, providing 101 a second set of instructions being arranged to communicate with end devices not comprising subscriber identity modules is performed. Upon receiving 102 instruction calls the server selects 103 one of the first set of instructions and the second set of instructions as a function of either the subscriber identity module or the end device being involved in instruction processing. The skilled practitioner will appreciate that the above mentioned method steps can be performed iteratively and/or in a different order.

## Claims

1. A method for seamlessly integrating Internet-of-Things devices into established mobile telecommunication infrastructures, comprising the steps:
- providing (100) a first set of instructions being arranged to communicate with subscriber identity modules, the instructions being deployed on a server;
- providing (101) a second set of instructions being arranged to communicate with end devices not comprising subscriber identity modules, **characterized in that**
- upon receiving (102) instruction calls the server selects (103) one of the first set of instructions and the second set of instructions as a function of either the subscriber identity module or the end device to be involved in instruction processing.

2. The method according to claim 1, **characterized in that** electrically powering end devices is performed using batteries and/ or induction coils.

3. The method according to claim 1 or 2, **characterized in that** communicating with end devices is performed considering instable connections.

4. The method according to any one of the preceding claims, **characterized in that** the end devices perform machine-to-machine communication steps.

5. The method according to any one of the preceding claims, **characterized in that** selecting (103) one instruction set is performed under consideration of at least one of a group of indicators the group comprising: a target identifier, a target type, an instruction, an instruction signature, a list of instructions being respectively assigned to either the first or the second set, a protocol specification and a supported instruction set.

6. The method according to any one of the preceding claims, **characterized in that** at least one instruction of the first set of instructions is imitated by at least one instruction of the second set of instructions.

7. The method according to any one of the preceding claims, **characterized in that** selecting (103) one instruction set is performed using an enhancement of an already established software module.

8. The method according to any one of the preceding claims, **characterized in that** the second set of instructions conforms with communication protocols for machine-to-machine communication.

9. The method according to any one of the preceding claims, **characterized in that** the second set of instructions conforms with at least one of XMPP, CoAP and MQTT.

10. The method according to any one of the preceding claims, **characterized in that** the second set of instructions provides an interface for communication with software modules each implementing a specific protocol.

11. The method according to any one of the preceding claims, **characterized in that** the end devices use communication interfaces implementing Wi-Fi, Bluetooth, infrared Near Field Communication and/ or Low-Power WAN (LPWAN).

12. The method according to any one of the preceding claims, **characterized in that** the end devices are operated using instructions from a read-only memory.

13. A communication protocol for seamlessly integrating Internet-of-Things devices into established mobile telecommunication infrastructures, implementing the method steps:
- providing (100) a first set of instructions being arranged to communicate with subscriber identity modules, the instructions being deployed on a server;
- providing (101) a second set of instructions being arranged to communicate with end devices not comprising subscriber identity modules, **characterized in that**
- upon receiving (102) instruction calls the server selects (103) one of the first set of instructions and the second set of instructions as a function of either the subscriber identity module or the end device to be involved in instruction processing.

14. Server system for seamlessly integrating Internet-of-Things devices into established mobile telecommunication infrastructures, comprising:
- a storage being arranged to provide (100) a first set of instructions being arranged to communicate with subscriber identity modules, the instructions being deployed on a server;
- a further storage being arranged to provide (101) a second set of instructions being arranged to communicate with end devices not comprising subscriber identity modules, **characterized in that**
- upon receiving (102) instruction calls the server selects (103) one of the first set of instructions and the second set of instructions as a function of either the subscriber identity module or the end device to be involved in instruction processing.

15. A computer program product being arranged to perform a method in accordance with any one of the preceding claims 1 to 12.
